# EUROPÄISCHE PATENTSCHRIFT

(11) **EP 2 722 573 B1**
(45) Veröffentlichungstag und Bekanntmachung des Hinweises auf die Patenterteilung: **04.09.2019**
(21) Anmeldenummer: 13188320.9
(22) Anmeldetag: 11.10.2013
(51) Int. Cl.: F16L 37/47, F24C 3/12

(54) **Ventilanordnung für ein gasbeheiztes Gargerät**
Valve assembly for a gas-heated cooking device
Agencement de vannes pour un four de cuisson à gaz

(30) Priorität: 16.10.2012 ES 201231580
(43) Veröffentlichungstag der Anmeldung: 23.04.2014
(73) Patentinhaber: BSH Hausgeräte GmbH, 81739 München (DE)
(72) Erfinder: Andrade Soares, Paulo Marcos, 39012 Santander (ES); Corral Ricalde, Javier, 39600 Muriedas (ES); Gutierrez Humara, Melca, 39650 La Penilla (ES); Peña Martín, Oscar, 39478 Boo de Pielagos (ES); Placer Maruri, Emilio, 39120 Liencres (ES)

(56) Entgegenhaltungen:
- EP-A2- 0 530 778
- WO-A1-2009/119058
- DE-T2- 69 430 787
- FR-A1- 2 787 177
- US-A- 3 826 523
- US-A- 5 707 085
- US-B1- 6 497 433
- US-B1- 7 338 092

## Beschreibung

Die vorliegende Erfindung betrifft eine Ventilanordnung für ein gasbeheiztes Gargerät.

Gasventile in gasbeheizten Gargeräten, wie etwa einem Herd, einem Kochfeld, einer Kochmulde oder einem Backofen, sind grundsätzlich bekannt. Diese dienen dem Einstellen eines Gasstroms hin zu Brennern des Gargeräts. Dazu wird ein entsprechendes Gasventil in eine Leitung des Gargeräts eingefügt.

Weiter ist es bekannt, ein Hauptgasventil in einer Hauptgasleitung des Gargeräts vorzusehen. Das Hauptgasventil wird mittels Kupplungen mit der Hauptgasleitung verbunden. Auf die Hauptgasleitung sind Gashähne aufgesetzt, welche einen jeweiligen Brenner mit der Hauptgasleitung verbinden. Das Hauptgasventil samt Kupplungen soll möglichst einen Durchflussquerschnitt aufweisen, welcher dem der Hauptgasleitung entspricht, um eine ausreichende Versorgung sämtlicher Brenner des Gargeräts mit Gas zu gewährleisten. Diese Anforderung hat in der Vergangenheit zu Lösungen geführt, welche montagetechnisch ungünstig waren.

Die DE 694 30 787 T2 beschreibt ein Kugelventil, das mittels Drehung einer Spindel zum Drehen einer Ventilkugel, die mit der Spindel in Eingriff steht, geöffnet und geschlossen wird, wobei ein Schulterbereich eines die Spindel lagernden Ventilkörpers integral mit einem oberen Flansch vorgesehen ist.

Vor diesem Hintergrund besteht eine Aufgabe der vorliegenden Erfindung darin, eine verbesserte Ventilanordnung für ein gasbeheiztes Gargerät zu schaffen, welche sich einfach montieren lässt.

Demgemäß wird eine Ventilanordnung für ein gasbeheiztes Gargerät mit einem Gasventil zum Einstellen eines Gasstroms, einem Rohr zum Führen des Gasstroms und einer Halteeinrichtung bereitgestellt. Das Gasventil weist einen Flansch auf. Die Halteeinrichtung ist dazu eingerichtet, ein Ende des Rohrs axial gegen den Flansch des Gasventils für einen gasdichten Abschluss zu pressen, wobei die Halteeinrichtung eine Manschette umfasst, welche dazu eingerichtet ist, das Ende des Rohrs axial gegen den Flansch zu pressen, und wobei die Manschette einen Betätigungsring und mehrere Zungen umfasst, die jeweils eine Kontur an ihrem einen Ende aufweisen, welche für eine axiale Anlage gegen den Wandabschnitt angepasst ist.

Dadurch, dass ein gasdichter Abschluss geschaffen wird, indem zwei Flächen axial, d.h. in der Haupterstreckungsrichtung des Rohrs, gegeneinander gepresst werden, wird der Durchflussquerschnitt des Rohrs bzw. des Gasventils nicht negativ beeinträchtigt, insbesondere nicht bzw. nicht wesentlich verkleinert. Entsprechend eignet sich diese Lösung besonders gut für Hauptgasventile, welche einen großen Durchflussquerschnitt erfordern. Mit "Einstellen eines Gasstroms" sind die Ventilstellungen "ganz auf" und "ganz zu" gemeint. Je nach Anwendungsfall können aber auch Zwischenstellungen zum Steuern des Gasstroms umfasst sein.

Außerdem lässt sich das Ende des Rohrs montagetechnisch einfach axial gegen den Flansch des Gasventils pressen.

Erfindungsgemäß
umfasst das Ende des Rohrs einen sich radial nach innen und/oder außen erstreckenden Wandabschnitt, welcher für den gasdichten Abschluss axial gegen den Flansch des Gasventils anliegt. Insbesondere kann der Wandabschnitt einen ersten, sich nach radial außen erstreckenden Abschnitt und einen zweiten, sich an den ersten Abschnitt anschließenden und nach radial innen erstreckenden Abschnitt umfassen. In diesem Fall kann vorgesehen sein, dass nur der zweite Abschnitt gegen den Flansch anliegt.

Gemäß einer weiteren Ausführungsform ist der Wandabschnitt radial nach innen und/oder außen gebogen. Der Wandabschnitt, insbesondere der vorstehend erwähnte erste und zweite Abschnitt desselben, lässt sich kostengünstig durch Biegen herstellen.

Die Halteeinrichtung umfasst eine Manschette, welche dazu eingerichtet ist, das Ende des Rohrs axial gegen den Flansch zu pressen. Die Manschette kann durch Verschrauben, Verrasten sowie form- und/oder reibschlüssiges Koppeln mit dem Rohr und einem Anschlussstutzen des Gasventils verbindbar sein. Die Manschette ist beispielsweise aus Kunststoff hergestellt. Die Manschette kann ein oder mehrere sich insbesondere axial erstreckende Zungen umfassen. Die Zungen können elastisch ausgebildet sein. Das Rohr durchgreift die Manschette bzw. die Manschette sitzt auf dem Rohr.

Die Manschette, insbesondere eine Zunge derselben, weist eine Kontur an ihrem einen Ende auf, welche für eine axiale Anlage gegen den Wandabschnitt angepasst ist. Die Kontur drückt also von hinten gegen den Wandabschnitt, welcher sodann vorne gasdicht abdichtend gegen den Flansch des Gasventils gepresst wird. Die Manschette kann einen sich radial - in Bezug auf die Haupterstreckungsrichtung des Rohrs - erstreckenden Betätigungsabschnitt aufweisen, welcher bevorzugt für eine manuelle Betätigung geeignet ausgebildet ist und hierzu eine Riffelung aufweisen kann.

Gemäß einer weiteren Ausführungsform umfasst die Halteeinrichtung eine Rast und eine Gegenrast, um das Ende des Rohrs gegen den Flansch des Gasventils zu pressen. Die Rast und Gegenrast können insbesondere elastisch miteinander verrastet werden, um einen Formschluss zwischen dem Rohr und dem Anschlussstutzen des Gasventils vorzusehen.

Gemäß einer weiteren Ausführungsform ist die Rast an der Manschette und/oder die Gegenrast an einem Anschlussstutzen des Gasventils ausgebildet. Für das Verrasten der Rast und Gegenrast kann die Manschette bzw. deren ein oder mehrere Zungen in einen zwischen dem Anschlussstutzen und dem Rohr gebildeten Spalt geschoben werden.

Gemäß einer weiteren Ausführungsform ist die Rast in Form einer Erhebung und/oder die Gegenrast in Form einer Ausnehmung ausgebildet. Sowohl die Erhebung als auch die Ausnehmung lassen sich einfach herstellen.

Gemäß einer weiteren Ausführungsform ist die Erhebung an einer Außenseite einer Zunge der Manschette ausgebildet und dazu eingerichtet, elastisch in die Ausnehmung in dem Anschlussstutzen zu schnappen. Dadurch ist eine formschlüssige Verbindung zwischen dem Rohr und dem Anschlussstutzen bzw. dem Gasventil einfach herstellbar.

Gemäß einer weiteren Ausführungsform weist die Erhebung eine Einführschräge an ihrer dem Flansch des Gasventils zugewandten Seite auf. Dadurch kann die entsprechende Zunge, welche die Erhebung mit der Einführschräge aufweist, beim Einführen elastisch und radial nach innen ohne besonderen Kraftaufwand seitens einer Bedienerperson verformt werden, um die Erhebung in Eingriff mit der Ausnehmung zu bringen.

Gemäß einer weiteren Ausführungsform weist die Halteeinrichtung eine Feder auf, welche dazu eingerichtet ist, das Ende des Rohrs gegen den Flansch zu pressen. Die Feder kann beispielsweise als Schenkelfeder ausgebildet sein. Gemäß einer weiteren Ausführungsform ist die Feder axial formschlüssig mit einer Ausnehmung des Anschlussstutzens des Gasventils in Eingriff bringbar. Alternativ oder zusätzlich ist die Feder dazu eingerichtet, die Manschette reib- und/oder formschlüssig in axialer Richtung zu halten. Beispielsweise werden in dem Fall, dass die Feder als Schenkelfeder ausgebildet ist, deren Schenkel zunächst aufgespreizt und dann in Eingriff mit der Ausnehmung gebracht, woraufhin die Schenkel dann nach radial innen gegen die Manschette pressen und so einen Reibschluss zu dem Rohr hin schaffen.

Gemäß einer weiteren Ausführungsform ist das Ventil als Kugelventil ausgebildet. Solche sind für Hauptgasleitungen besonders geeignet.

Gemäß einer weiteren Ausführungsform ist vorgesehen, dass das Gasventil zwei Flansche aufweist und jeweils ein Rohr zum Führen eines Gasstroms mittels einer jeweiligen Halteeinrichtung mit einem Ende desselben axial gegen einen der Flansche für einen gasdichten Abschluss pressbar ist. Die Flansche können sich gegenüberliegen.

Weiterhin wird ein gasbeheiztes Gargerät mit der erfindungsgemäßen Ventilanordnung bereitgestellt.

Gemäß einer Ausführungsform ist das Gasventil als Hauptgasventil ausgebildet, welches dazu eingerichtet ist, wenigstens einen Brenner des gasbeheizten Gargeräts mit einem geräteexternen Gasanschluss zu verbinden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen der Ventilanordnung oder des gasbeheizten Gargeräts. Dabei wird der Fachmann auch Einzelaspekte als Verbesserungen oder Ergänzungen zu der jeweiligen Grundform der Erfindung hinzufügen oder abändern.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.Es zeigen dabei:
Fig. 1: teilweise in einer perspektivischen Ansicht ein gasbeheiztes Gargerät gemäß einer Ausführungsform;
Fig. 2: perspektivisch einen Längsschnitt aus Fig. 1;
Fig. 3: eine vergrößerte Teilansicht aus Fig. 2;
Fig. 4: in einer perspektivischen Ansicht eine Ventilanordnung gemäß einer weiteren Ausführungsform; und
Fig. 5: die Ventilanordnung aus Fig. 4 in geschnittener Darstellung.

In den Figuren sind gleiche oder funktionsgleiche Elemente mit denselben Bezugszeichen versehen worden, sofern nichts Anderes angegeben ist.

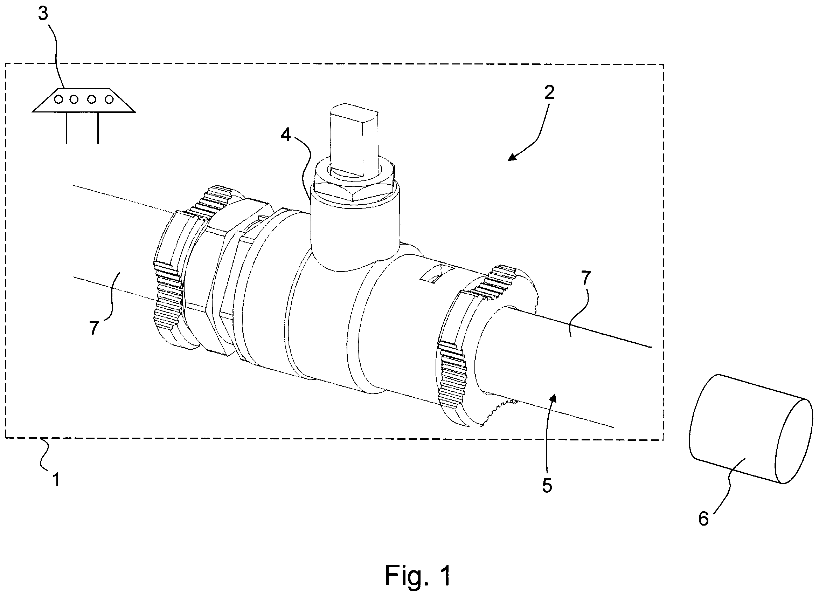

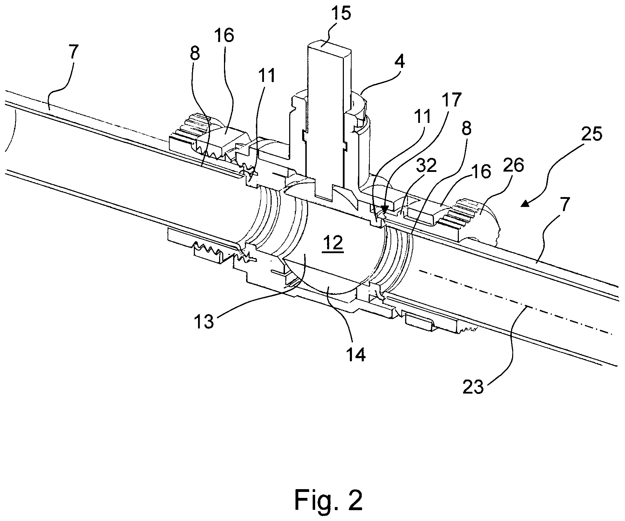

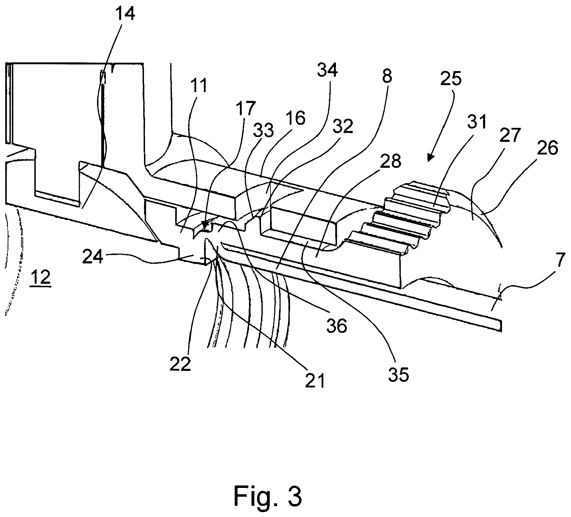

Figur 1 zeigt teilweise in einer perspektivischen Darstellung ein gasbeheiztes Gargerät 1 gemäß einer Ausführungsform. Figur 2 zeigt perspektivisch einen Längsschnitt aus Figur 1, und Figur 3 eine vergrößerte Detailansicht aus Figur 2.

Das gasbeheizte Gargerät 1 umfasst eine Ventilanordnung 2 sowie mehrere Gasbrenner 3, von denen jedoch lediglich beispielhaft einer dargestellt ist.

Die Ventilanordnung 2 umfasst ein Hauptgasventil 4. Insbesondere kann das Hauptgasventil 4 in Form eines Kugelventils ausgebildet sein.

Das Hauptgasventil 4 ist in eine Hauptgasleitung 5 eingefügt. Auf die Hauptgasleitung 5 sind nicht dargestellte Gashähne aufgesetzt, welche einen jeweiligen Gasbrenner 3 mit der Hauptgasleitung 5 verbinden. Ein jeweiliger Gashahn kann ein Gasventil mit einem zugeordneten Zündschalter zum Zünden des entsprechenden Gasbrenners 3 umfassen. Dem Hauptgasventil 4 wird Brenngas von einem geräteexternen Gasanschluss 6 zugeführt.

Die Hauptgasleitung 5 umfasst zwei Rohre 7, welche jeweils an ihren Enden 8 mit dem Hauptgasventil 4 gasdicht verbunden sind, wie nachfolgend anhand der Figuren 2 und 3 für das in Figur 1 rechts gezeigte Rohr 7 näher erläutert wird. Diese Erläuterungen haben genauso Gültigkeit für das in Figur 1 links dargestellte Rohr 7.

Das Hauptgasventil 4 weist axiale Flansche 11 auf, welche einen Gaskanal 12 des Hauptgasventils 4 begrenzen. Der Gaskanal 12 ist mittels eines eine Durchflussöffnung 13 aufweisenden Kugelschließelements 14 freigebbar und verschließbar. Das Freigeben und Verschließen erfolgt durch entsprechende Betätigung eines Ventilschafts 15. Außerdem weist das Hauptgasventil 4 einen Anschlussstutzen 16 für ein jeweiliges Rohr 7 auf.

Das Rohr 7 weist, wie in Figur 3 zu erkennen, einen gebogenen Wandabschnitt 17 an seinem einen Ende 8 auf. Der Wandabschnitt 17 setzt sich aus einem ersten und einem zweiten Abschnitt 21, 22 zusammen. Der erste Wandabschnitt 21 krümmt sich nach radial außen, während sich der zweite Abschnitt 22 an den ersten Abschnitt 21 anschließt und nach radial innen krümmt. Somit ergibt sich eine etwa hakenförmige Form für den Wandabschnitt 17. "Axial" und "radial" beziehen sich vorliegend immer auf eine Mittelachse 23 (s. Figur 2) der Rohre 7 bzw. des Hauptgasventils 4. Der Abschnitt 22 und der Flansch 11 liegen axial derart gegeneinander an, dass ein gasdichter Abschluss entsteht. Hierzu wird das Ende 8 des Rohrs 7 entsprechend in Richtung des Hauptgasventils 4 gepresst. Zusätzlich kann eine Dichtung, beispielsweise aus Gummi, zwischen dem Flansch 11 und dem Abschnitt 22 an einer mit 24 bezeichneten Stelle vorgesehen sein.

Um nun das Rohr 7 entsprechend gegen den Flansch 11 zu pressen, ist eine Halteeinrichtung 25 vorgesehen. Die Halteeinrichtung 25 umfasst eine Manschette 26, welche sich aus einem Betätigungsring 27 und mehreren Zungen 28 (hiervon ist nur eine in Figur 3 zu sehen) zusammensetzt. Der Betätigungsring kann eine Riffelung 31 für eine manuelle Betätigung der Manschette 26 umfassen. An der Zunge 28 ist radial außen eine Erhebung 32 gebildet. Die Erhebung 32 weist eine Einführschräge 33 an der Seite der Erhebung 32 auf, welche in Richtung des Flanschs 11 weist.

Weiterhin umfasst die Halteeinrichtung 25 eine Ausnehmung 34 in dem Anschlussstutzen 16. Die Ausnehmung 34 kann den Anschlussstutzen 16 radial vollständig durchdringen und beispielsweise rechtecksförmig ausgebildet sein.

Um die Ventilanordnung 2 zu montieren, wird zunächst das Ende 8 des Rohrs 7 bzw. der Abschnitt 22 des gebogenen Wandabschnitts 17 gegen den Flansch 11 positioniert, wobei sich dann das Ende 8 des Rohrs 7 in den Anschlussstutzen 16 hineinerstreckt. Anschließend wird die Manschette 26 von dem anderen, nicht dargestellten Ende des Rohrs 7 her auf dieses aufgeschoben. In einem weiteren Schritt wird die Zunge 28 in einen Spalt 35 zwischen dem Anschlussstutzen 16 und dem Ende 8 des Rohrs 7 eingeschoben. Dabei sorgt die Einführschräge 33 dafür, dass die Erhebung 32 mit nur geringem Kraftaufwand seitens einer Bedienerperson unter den Anschlussstutzen 16 bzw. in diesen hinein schlüpft. Dazu wird die Zunge 28 nach radial innen elastisch verformt. Anschließend gelangt eine Kontur 36 am Ende der Zunge 28 in Anlage mit dem ersten Abschnitt 21 des Wandabschnitts 17 und drückt den zweiten Wandabschnitt 22 abdichtend gegen den Flansch 11. Wird ausreichend hoher Druck in axialer Richtung aufgebracht, so gelangt die Erhebung 32 in eine Position, in welcher sie in die Ausnehmung 34 schnappt. Somit entsteht ein Formschluss zwischen dem Rohr 7, der Manschette 26 und dem Anschlussstutzen 16 in axialer Richtung.

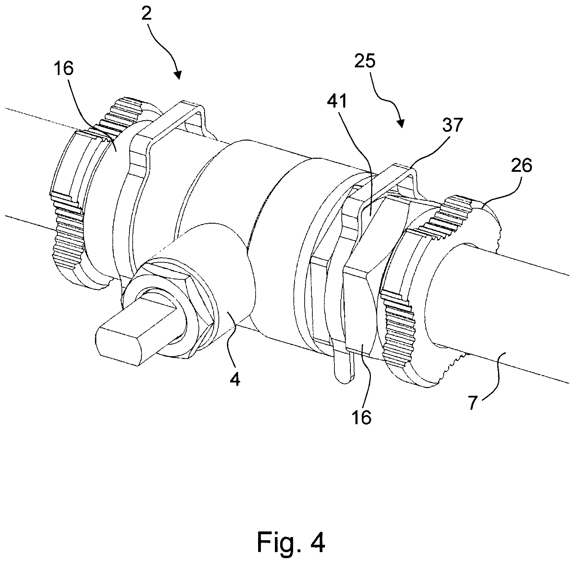

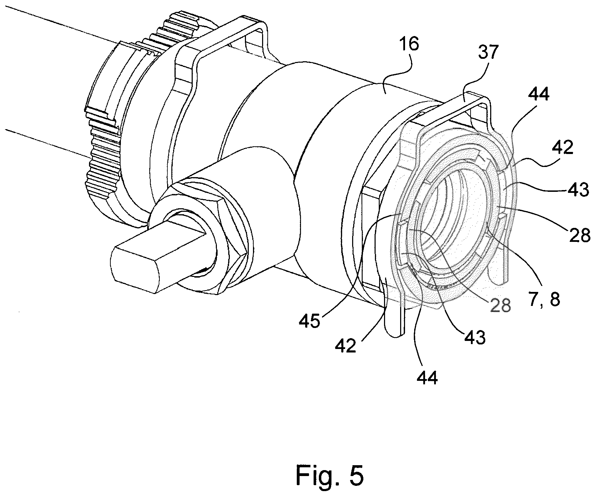

Figur 4 illustriert in einer perspektivischen Ansicht eine Ventilanordnung 2 gemäß einer weiteren Ausführungsform. Figur 5 zeigt die Ventilanordnung 2 aus Figur 4 in geschnittener Darstellung. Nachfolgend wird lediglich auf Unterschiede zu dem Ausführungsbeispiel nach den Figuren 1 bis 3 eingegangen.

Bei dem Ausführungsbeispiel nach den Figuren 4 und 5 weist die Halteeinrichtung 25 keine Erhebung 32 und Ausnehmung 34 nach dem Prinzip der Rast und Gegenrast auf, sondern es ist eine Schenkelfeder 37 vorgesehen. Der Anschlussstutzen 16 weist eine radiale Ausnehmung 41 auf, in welche die Schenkelfeder 37 mit ihren beiden Schenkeln 42 nach vorherigem Aufspreizen einspreizbar ist. Nach dem Einspreizen der Schenkelfeder 37 drückt diese direkt oder mittelbar, beispielsweise mit Hilfe von Elementen 43 gegen gegenüberliegende Zungen 28 der Manschette 26 nach radial innen. Die Elemente 43, welche insbesondere als Erhebungen ausgebildet und an den Zungen 28 radial außen angeformt sind, reichen durch radiale Öffnungen 44 in dem Anschlussstutzen 16 in einen Innenbereich 45 der Ausnehmung 41 hinein. Dadurch können die Schenkel 42 einfach in Anlage mit den Erhebungen 43 gebracht werden und so eine Kraft nach radial innen auf die Zungen 28 aufbringen. Mit Hilfe der aufgebrachten Kraft entsteht ein Reibschluss zwischen den Zungen 28 bzw. der Manschette 26 und dem Ende 8 des Rohrs 7. Dadurch wird der zweite Abschnitt 22 des Rohrs 7 in gasdichtender Anlage mit dem Flansch 11 des Hauptgasventils 4 gehalten. Die Erhebungen 43 können einen Formschluss mit den Öffnungen 44 bilden, so dass die Manschette 26 mit dem Anschlussstutzen 16 axial verbunden ist.

Obwohl die Erfindung anhand von Ausführungsbeispielen beschrieben wurde, ist sie vielfältig modifizierbar.

### Verwendete Bezugszeichen:

- 1: Gasbeheiztes Gargerät
- 2: Ventilanordnung
- 3: Gasbrenner
- 4: Hauptgasventil
- 5: Hauptgasleitung
- 6: Gasanschluss
- 7: Rohr
- 8: Ende
- 11: Flansch
- 12: Gaskanal
- 13: Durchflussöffnung
- 14: Kugelschließelement
- 15: Ventilschaft
- 16: Anschlussstutzen
- 17: Wandabschnitt
- 21: erster Abschnitt
- 22: zweiter Abschnitt
- 23: Mittelachse
- 24: Stelle
- 25: Halteeinrichtung
- 26: Manschette
- 27: Betätigungsring
- 28: Zunge
- 31: Riffelung
- 32: Erhebung
- 33: Einführschräge
- 34: Ausnehmung
- 35: Spalt
- 36: Kontur
- 37: Schenkelfeder
- 41: Ausnehmung
- 42: Schenkel
- 43: Erhebung
- 44: Öffnung
- 45: Innenbereich

## Patentansprüche

1. Ventilanordnung (2) für ein gasbeheiztes Gargerät (1), mit einem Gasventil (4) zum Einstellen eines Gasstroms, welches einen Flansch (11) aufweist, einem Rohr (7) zum Führen des Gasstroms und einer Halteeinrichtung (25), welche dazu eingerichtet ist, ein Ende (8) des Rohrs (7) axial gegen den Flansch (11) des Gasventils (4) für einen gasdichten Abschluss zu pressen, wobei das Ende (8) des Rohrs (7) einen sich radial nach innen und/oder außen erstreckenden Wandabschnitt (17) umfasst, welcher für den gasdichten Abschluss axial gegen den Flansch (11) des Gasventils (4) anliegt, wobei die Halteeinrichtung (25) eine Manschette (26) umfasst, welche dazu eingerichtet ist, das Ende (8) des Rohrs (7) axial gegen den Flansch (11) zu pressen, und wobei die Manschette (26) einen Betätigungsring (27) und mehrere Zungen (28) umfasst, die jeweils eine Kontur (36) an ihrem einen Ende aufweisen, welche für eine axiale Anlage gegen den Wandabschnitt (17) angepasst ist.

2. Ventilanordnung nach Anspruch 1, **dadurch gekennzeichnet, dass** der Wandabschnitt (17) nach radial innen und/oder außen gebogen ist.

3. Ventilanordnung nach einem der Ansprüche 1 bis 2, **dadurch gekennzeichnet, dass** die Halteeinrichtung (25) eine Rast (32) und eine Gegenrast (34) umfasst, um das Ende (8) des Rohrs (7) gegen den Flansch (11) des Gasventils (4) zu pressen.

4. Ventilanordnung nach Anspruch 3, **dadurch gekennzeichnet, dass** die Rast (32) an der Manschette (26) und/oder die Gegenrast (34) an einem Anschlussstutzen (16) des Gasventils (4) ausgebildet ist.

5. Ventilanordnung nach Anspruch 4, **dadurch gekennzeichnet, dass** die Rast (32) in Form einer Erhebung und/oder die Gegenrast (34) in Form einer Ausnehmung ausgebildet ist.

6. Ventilanordnung nach Anspruch 5, **dadurch gekennzeichnet, dass** die Erhebung (32) an einer Außenseite einer Zunge (28) der Manschette (26) ausgebildet und dazu eingerichtet ist, elastisch in die Ausnehmung (34) in dem Anschlussstutzen (16) zu schnappen.

7. Ventilanordnung nach Anspruch 5 oder 6, **dadurch gekennzeichnet, dass** die Erhebung (32) eine Einführschräge (33) an ihrer dem Flansch (11) des Gasventils (4) zugewandten Seite aufweist.

8. Ventilanordnung nach einem der Ansprüche 1 bis 2, **dadurch gekennzeichnet, dass** die Halteeinrichtung (25) eine Feder (37) aufweist, welche dazu eingerichtet ist, das Ende (8) des Rohrs (7) gegen den Flansch (11) zu pressen.

9. Ventilanordnung nach Anspruch 8, **dadurch gekennzeichnet, dass** die Feder (37) axial formschlüssig mit einer Ausnehmung (41) des Anschlussstutzens (16) des Gasventils (4) in Eingriff bringbar und/oder dazu eingerichtet ist, die Manschette (26) reib- und/oder formschlüssig in axialer Richtung zu erhalten.

10. Ventilanordnung nach einem der Ansprüche 1 bis 9, **dadurch gekennzeichnet, dass** das Gasventil (4) zwei Flansche (11) aufweist und jeweils ein Rohr (7) zum Führen eines Gasstroms mittels einer jeweiligen Halteeinrichtung (25) mit einem Ende (8) desselben axial gegen einen der Flansche (11) für einen gasdichten Abschluss pressbar ist.

11. Gasbeheiztes Gargerät (1) mit einer Ventilanordnung (2) nach einem der Ansprüche 1 bis 10.

12. Gasbeheiztes Gargerät (1) nach Anspruch 11, **dadurch gekennzeichnet, dass** das Gasventil (1) als Hauptgasventil ausgebildet ist, welches dazu eingerichtet ist, wenigstens einen Brenner (3) des gasbeheizten Gargeräts (1) mit einem geräteexternen Gasanschluss (6) zu verbinden.

## Claims

1. Valve arrangement (2) for a gas-heated cooking appliance (1), with a gas valve (4) for adjusting a gas flow, which has a flange (11), a pipe (7) for guiding the gas flow and a holding facility (25), which is configured to press one end (8) of the pipe (7) axially against the flange (11) of the gas valve (4) for a gas-tight closure, wherein the end (8) of the pipe (7) comprises a wall section (17) which extends radially inwards and/or outwards, which abuts axially against the flange (11) of the gas valve (4) for the gas-tight closure, wherein the holding facility (25) comprises a cuff (26), which is configured to press the end (8) of the pipe (7) axially against the flange (11), and wherein the cuff (26) comprises an actuation ring (27) and a plurality of tabs (28), which in each case have a contour (36) on their one end, which is adapted for axially abutting against the wall section (17).

2. Valve arrangement according to claim 1, **characterised in that** the wall section (17) is curved radially inwards and/or outwards.

3. Valve arrangement according to one of claims 1 to 2, **characterised in that** the holding facility (25) comprises a latch (32) and a latch mate (34), in order to press the end (8) of the pipe (7) against the flange (11) of the gas valve (4).

4. Valve arrangement according to claim 3, **characterised in that** the latch (32) is embodied on the cuff (26) and/or the latch mate (34) is embodied on a connecting port (16) of the gas valve (4).

5. Valve arrangement according to claim 4, **characterised in that** the latch (32) is embodied in the shape of a raised part and/or the latch mate (34) is embodied in the form of a cutout.

6. Valve arrangement according to claim 5, **characterised in that** the raised part (32) is embodied on an outer side of a tab (28) of the cuff (26) and is configured to resiliently snap into the cutout (34) in the connecting port (16).

7. Valve arrangement according to claim 5 or 6, **characterised in that** the raised part (32) has a lead-in chamfer (33) on its side facing towards the flange (11) of the gas valve (4).

8. Valve arrangement according to one of claims 1 to 2, **characterised in that** the holding facility (25) has a spring (37), which is configured to press the end (8) of the pipe (7) against the flange (11).

9. Valve arrangement according to claim 8, **characterised in that** the spring (37) is able to be brought into engagement in an axially form-fitting manner with a cutout (41) of the connecting port (16) of the gas valve (4) and/or is configured to retain the cuff (26) in a friction and/or form-fitting manner in the axial direction.

10. Valve arrangement according to one of claims 1 to 9, **characterised in that** the gas valve (4) has two flanges (11) and in each case a pipe (7) for guiding a gas flow by means of a respective holding facility (25) is able to be pressed with one end (8) of the same axially against one of the flanges (11) for a gas-tight closure.

11. Gas-heated cooking appliance (1) with a valve arrangement (2) according to one of claims 1 to 10.

12. Gas-heated cooking appliance (1) according to claim 11, **characterised in that** the gas valve (1) is embodied as a main gas valve, which is configured to connect at least one burner (3) of the gas-heated cooking appliance (1) to a gas connection (6) external to the appliance.

## Revendications

1. Agencement de vanne (2) pour un appareil de cuisson (1) chauffé au gaz, comprenant une vanne de gaz (4) destinée à régler un flux de gaz, laquelle présente une bride (11), comprenant un tube (7) destiné à guider le flux de gaz, et un dispositif de maintien (25) qui est configuré pour presser une extrémité (8) du tube (7) axialement contre la bride (11) de la vanne de gaz (4) pour une terminaison étanche au gaz, l'extrémité (8) du tube (7) comprenant une section de paroi (17) s'étendant radialement vers l'intérieur et/ou vers l'extérieur, laquelle est appliquée axialement contre la bride (11) de la vanne de gaz (4) pour la terminaison étanche au gaz, le dispositif de maintien (25) comprenant une manchette (26) qui est configurée pour presser l'extrémité (8) du tube (7) axialement contre la bride (11), et la manchette (26) comprenant une bague d'actionnement (27) et plusieurs languettes (28) qui présentent respectivement un contour (36) sur l'une de leurs extrémités, lequel est adapté pour une application axiale contre la section de paroi (17).

2. Agencement de vanne selon la revendication 1,
**caractérisé en ce que** la section de paroi (17) est courbée radialement vers l'intérieur et/ou l'extérieur.

3. Agencement de vanne selon l'une quelconque des revendications 1 à 2,
**caractérisé en ce que** le dispositif de maintien (25) comprend un cran d'arrêt (32) et un contre-cran d'arrêt (34) afin de presser l'extrémité (8) du tube (7) contre la bride (11) de la vanne de gaz (4).

4. Agencement de vanne selon la revendication 3,
**caractérisé en ce que** le cran d'arrêt (32) est réalisé sur la manchette (26) et/ou **en ce que** le contre-cran d'arrêt (34) est réalisé sur un manchon de raccordement (16) de la vanne de gaz (4).

5. Agencement de vanne selon la revendication 4,
**caractérisé en ce que** le cran d'arrêt (32) est réalisé en forme d'une élévation et/ou **en ce que** le contre-cran d'arrêt (34) est réalisé en forme d'un évidement.

6. Agencement de vanne selon la revendication 5,
**caractérisé en ce que** l'élévation (32) est réalisée sur un côté extérieur d'une languette (28) de la manchette (26) et est configurée pour s'enclencher de manière élastique dans l'évidement (34) dans le manchon de raccordement (16).

7. Agencement de vanne selon la revendication 5 ou 6,
**caractérisé en ce que** l'élévation (32) présente un biseau d'introduction (33) sur son côté tourné vers la bride (11) de la vanne de gaz (4).

8. Agencement de vanne selon l'une quelconque des revendications 1 à 2,
**caractérisé en ce que** le dispositif de maintien (25) présente un ressort (37) qui est configuré pour presser l'extrémité (8) du tube (7) contre la bride (11).

9. Agencement de vanne selon la revendication 8,
**caractérisé en ce que** le ressort (37) peut être mis en prise axialement avec adhérence de forme avec un évidement (41) du manchon de raccordement (16) de la vanne de gaz (4) et/ou est configuré pour maintenir la manchette (26) en direction axiale par friction et/ou avec adhérence de forme.

10. Agencement de vanne selon l'une quelconque des revendications 1 à 9,
**caractérisé en ce que** la vanne de gaz (4) présente deux brides (11) et **en ce que** respectivement un tube (7) destiné à guider un flux de gaz au moyen d'un dispositif de maintien (25) respectif peut être pressé contre l'une des brides (11) avec une extrémité (8) de ce dernier pour une terminaison étanche au gaz.

11. Appareil de cuisson (1) chauffé au gaz, comprenant un agencement de vanne (2) selon l'une quelconque des revendications 1 à 10.

12. Appareil de cuisson (1) chauffé au gaz, selon la revendication 11,
**caractérisé en ce que**
la vanne de gaz (1) est réalisée comme vanne de gaz principale, laquelle est configurée pour relier au moins un brûleur (3) de l'appareil de cuisson (1) chauffé au gaz à un raccord de gaz (6) externe à l'appareil.
